# EUROPEAN PATENT SPECIFICATION

(11) **EP 2 531 400 B1**
(45) Date of publication and mention of the grant of the patent: **08.01.2014**
(21) Application number: 11705433.8
(22) Date of filing: 01.02.2011
(51) Int. Cl.: B63B 27/18

(54) **A METHOD OF TRANSFERRING A LOAD BETWEEN A VESSEL AND A WIND TURBINE**
VERFAHREN ZUR ÜBERTRAGUNG DER LAST ZWISCHEN EINEM WASSERFAHRZEUG UND EINER WINDTURBINE
PROCÉDÉ DE TRANSFERT DE CHARGE ENTRE UN NAVIRE ET UNE ÉOLIENNE

(30) Priority: 02.02.2010 EP 10001039
(43) Date of publication of application: 12.12.2012
(73) Proprietor: XEMC Darwind B.V., 1217 JC Hilversum (NL)
(72) Inventor: PASTEUNING, Jan, Willem, Nicolaas, NL-5076 CB Haaren (NL)
(74) Representative: Altenburg, Bernardus Stephanus Franciscus
(86) International application number: PCT/EP2011/000434
(87) International publication number: WO 2011/095316

(56) References cited:
- WO-A2-01/46583
- DE-U1- 20 313 550
- FR-A1- 2 614 947
- GB-A- 2 073 304
- NL-C1- 1 010 650
- SE-B- 422 670
- US-A- 2 874 855
- US-A- 4 348 960

## Description

The invention relates to a method of transferring a load between a vessel and a wind turbine.

Offshore wind turbines require regular maintenance and repair operations. Maintenance personnel with their equipment are transported to the wind turbine by ship. The personnel and their equipment have to move from the deck of the ship to the entrance of the wind turbine which is well above sea level, typically at a height of up to about 20 meters. When the waves are too high safety requirements do not allow transfer to the wind turbine and maintenance or repair cannot be carried out. As a result, maintenance and repair can only be carried out during a limited range of weather conditions the so-called weather window. Consequently, the accessibility of the wind turbine is reduced resulting in an increase of costs. WO 2006/013342 discloses a method of providing access from a vessel to a fixed offshore structure by means of a gangway attached to one or more tensioned guide wires. The gangway can be inflatable or it can be a bridge member retained on a runway of the vessel and deployed using the tensioned guide wires.

A problem of the known method is that the line has to be attached to the offshore wind turbine, possibly at a point higher than the entrance platform to be reached, which is often ten or more meters above sea level, and guarantee the safety of the personnel involved.

The object of the present invention is a method of transferring a load, such as a person, between an offshore wind turbine and a ship to allow the transfer of said load more securely.

To this end, the present invention provides a method of transferring a load between an offshore wind turbine and a ship, wherein
- the wind turbine comprises a tower with an entrance above sea level;
- the tower comprises an accessory line, a tower body and a hollow boom at the outside of the tower body, said hollow boom being capable of serving as a guide for the accessory line, the hollow boom extending from the tower body at an angle β to the vertical pointing downwards; and
- the vessel carries a main line having a distal end for connection to the tower;
the method comprising the steps of
- lowering the accessory line through the hollow boom at a horizontal distance of at least 1 m from the tower body;
- connecting the main line at its distal end to the accessory line;
- hoisting the distal end of the main line using the accessory line;
- releasably connecting the distal end of the main line to the hollow boom of the tower using a connector, the connection being releasable by remote control;
- using the vessel to ensure that the main line is taut at an angle α of less than 45° with the horizontal; and
- guiding a transport member along the taut main line to move the load between the vessel and the wind turbine.

The method according to the invention allows for a safe transport of a load, such as a person, because the main line can be inspected at all times. More specifically, the main line is not part of the (offshore) wind turbine and hence not subject to corrosive conditions without inspection being possible. The accessory line does not carry the load and is only used to connect the main line to the offshore wind turbine. Should the accessory line fail during hoisting of the main line and before connection thereof to the tower, the only effect is that the main line may drop into the sea. However, the accessory line may be used as a fail-safe, in case the connector fails. This will require selection of an accessory line of adequate strength to handle the force exerted by the transport member and its load. Once the main line is connected to the offshore wind turbine, the load will be fully carried by the main line, the reliability of which can be guaranteed by proper maintenance and inspection. Generally, the transport member will be guided to the entrance, or more specifically to a platform in front of the entrance. In that case, the main line will be connected to the tower at a point above the entrance. However, it is also possible to attach the line to a lower point. A ladder or similar means can then lead to the entrance. The main line will for example have a length of about 1,5 - 2,5 times the height of its point attachment relative to sea level, although the main line can also be longer or shorter if so desired. A length of about twice the height of its point of attachment relative to sea level results in an angle of about 30 degrees with the horizon. With such an angle shock loads induced by movement of the ship are effectively reduced. The main line can comprise a cable or a set of cables, e.g. three or more parallel cables and/or interconnected cables, e.g. interconnected by cross pieces or the like. Alternatively, or additionally, the main line can comprise one or more bands or similar provisions. "Release by remote control" is to be interpreted broadly. It may be performed from vessel, or from a control centre monitoring a park of offshore wind turbines. It may be performed wireless, e.g. using radio waves, or by use of a cable. The method according to the invention provides safe access to an offshore wind turbine from the vessel, such as a service boat, even under difficult weather conditions. Direct contact between the moving vessel and the offshore wind turbine is avoided. Since the ship is continuously kept at a distance from the wind turbine to be entered, there is no risk that persons are clamped between the vessel and the wind turbine. The line forms a gradual transition from the movements of the ship to the static condition of the offshore wind turbine to be entered. This helps to ensure the safety of a person transported to or from the wind turbine. The line can be put taut by moving the vessel away from the offshore wind turbine, e.g., by moving the vessel backward with the motor in reverse, for example half or minimum speed astern. The vessel does not need to be accurately steered in a particular direction, which makes the system self-stabilizing. By lowering the accessory line from the tower before the distal end of the main line is connected to the accessory line, the deterioration (by the elements, salt, oxidation, and/or marine life) the accessory line would otherwise experience if, instead, it had been left hanging from the tower close to sea level or left floating or hanging in the sea is reduced. This is in particular advantageous if the accessory line may have to act as a fail-safe.

SE422670 discloses a method of transferring a load between a vessel and an offshore structure using a boom. It does not disclose lowering an accessory line through a hollow boom and connecting a main line to the boom using a connector.

WO01/46583 discloses a wind turbine with a hollow boom for attaching a housing for subsystems such as a transformer outside the tower.

The accessory line being lowered from the boom at a horizontal distance of at least 1 m from the tower body makes it safer to pick up the accessory cable for attachment to the distal end, helping to ensure the safety of the crew on board of the vessel, because contact between vessel and tower can be avoided more easily.

A convenient way to lower the accessory line is by using a winch that is remotely controllable.

This winch will then also serve to hoist the main line up.

According to a preferred embodiment, the connector comprises a passive section and an active section for releasably connecting to the passive section, the distal end of the main line being provided with the active section, and the active section of the connector is connected to the passive section after hoisting the distal end.

The passive section will not deteriorate quickly and does not require significant maintenance or inspection. The active section may require this, and this can easily be achieved because it is a part that comes with the vessel.

According to a preferred embodiment, the active section of the connector is inserted into the passive section having a stop, and the active section comprises at least one moveable arm and an actuator for controlling the spread of said arm, the stop preventing the active section from leaving the passive section if said at least one arm is spread.

To block the active section from leaving the passive section, the arm will be spread out. Preferably there are at least two arms, as this increases safety (as one arm may be sufficient to block the active section), in case of failure of an arm.

According to a preferred embodiment, the active section is designed such that the stop helps to keep the arms spread out and hence the active section blocked from leaving the passive section.

The main line and/or the connector and/or transport member will provide the weight to achieve this.

The present invention also relates to an offshore wind turbine comprising a tower provided with an accessory line for hoisting a main line for transferring a load between a vessel and the offshore wind turbine using a transport member, wherein the tower comprises
- a tower body; and
- a hollow boom capable of serving as a guide for the accessory line, the hollow boom extending from the tower body at an angle β to the vertical pointing downwards for lowering the accessory line at a horizontal distance from the outer wall of the tower body of at least 1 m,
characterized in that the hollow boom (114) is provided at its inner wall with a stop (545) and the stop (545) comprises a tapered flange, tapering towards the center line of the hollow boom (114) and towards the proximal end of the hollow boom (114)..

Such a stop allows for a very high level of (passive) safety against accidental release, because it helps to spread out the arms of the active section of the connector. This is an example of the distal end of the hollow boom being a passive section of the connector. It is advantageous if the boom comprises the passive section of the connector because a passive section doesn't require the level of maintenance and inspection that an active section requires. The active section of the connector is attached to the main cable, thus easily available for inspection and maintenance, and - if necessary - repair or replacement. The angle will generally be less than 60°, preferably less than 45° such as 30°. This allows the accessory line to be lowered from the tower very reliably. The accessory line may be partially housed inside the tower body, protecting the accessory line from the environment (wind, water, sun, salt etc.). When not in use, the distal end of the accessory line is housed in the hollow boom.

According to a preferred embodiment, the wind turbine comprises a remotely controllable winch for lowering the accessory line and raising the main line.

A winch is a convenient device for lowering the accessory line and hoisting the main line connected to the accessory line.

The invention is further explained with reference to the accompanying drawing, in which:
Fig. 1 shows an offshore wind turbine being accessed using the method according to the invention;
Fig. 2 shows a detail of the tower of the offshore wind turbine of fig. 1;
Fig. 3a-c show a method of connecting a main line to an offshore wind turbine;
Fig. 4 shows a detail of a cabin transported over a main line; and
Fig. 5a-d illustrate a connector for connecting a main line to an offshore wind turbine.

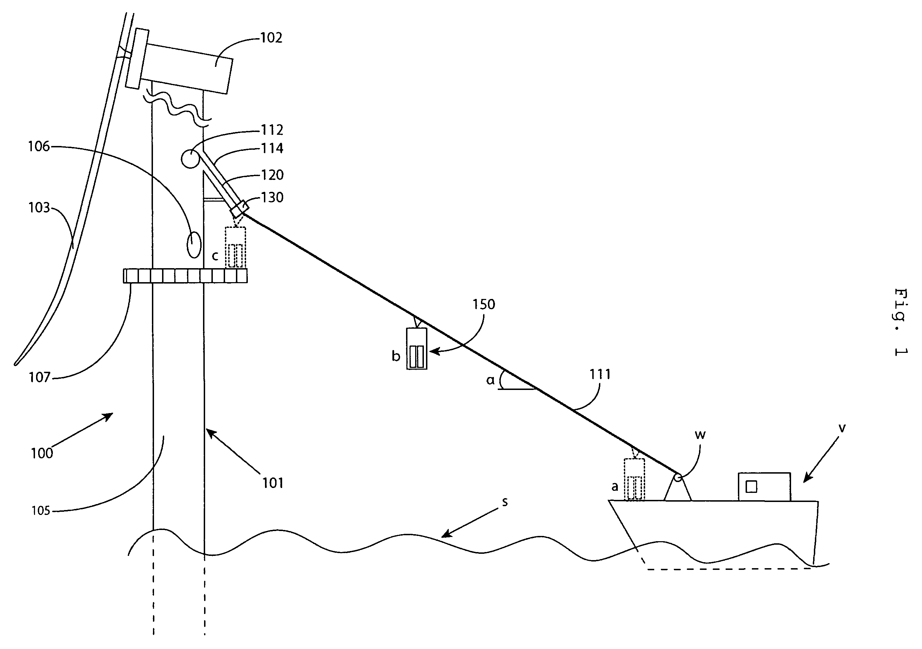

Fig. 1 shows an offshore wind turbine 100 according to the invention. It comprises a tower 101 provided with a nacelle 102 and turbine blades 103 (one shown in full). The offshore wind turbine 100 is located in a body of water such as a lake or, more usually a salt body of water such as shown here, at sea S. The tower 101 comprises a tower body 105 with an entrance 106 near a platform 107. In case of maintenance or repair, a person will have to be transferred from a vessel V to the wind turbine 100, in particular to the platform 107 so as to allow the person to enter entrance 106 conveniently. It is known in the art to provide a line 111 (main line, as it is called in the present application) between the wind turbine 100 and the vessel V. The method of transferring a load in accordance with the present invention involves a convenient method of establishing a link between the wind turbine 100 and the vessel V.

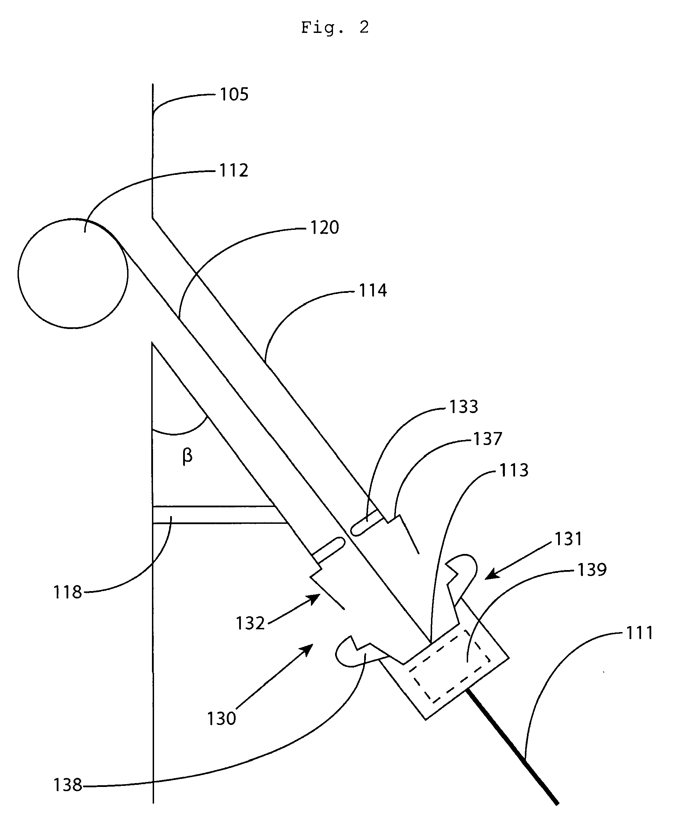

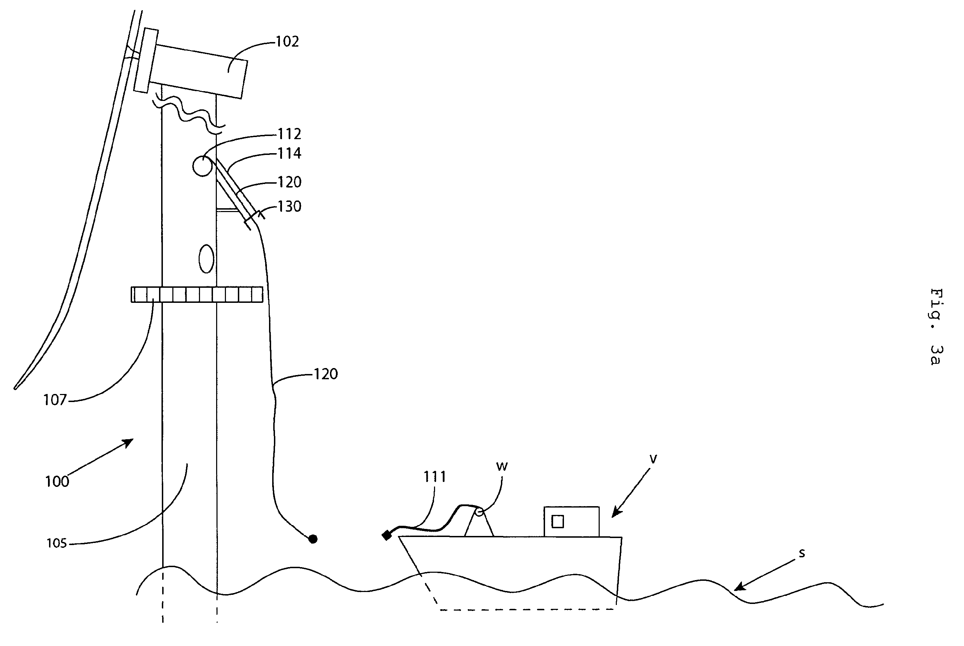

In accordance with the present invention, an accessory line 120 provided in the wind turbine (available on a winch 112) is lowered with one end 113 via a boom 114 (fig. 2; fig. 3a). This allows the crew on board of the vessel to grab the end 113 while staying away from the wind turbine. Increased distance helps to avoid that the vessel collides with the tower. While it may be done by hand, more clearance is possible if a tool such as a boathook is used. The command for a winch 112 to lower the accessory line 120 may be given radiographically from the vessel V, or via a cable by a remote control station (not shown). When not in use, the accessory line is in a reeled up state, as a result of which the accessory line is protected from the influence of the sea, so it will not or not frequently be necessary to repair or replace the accessory line 120.

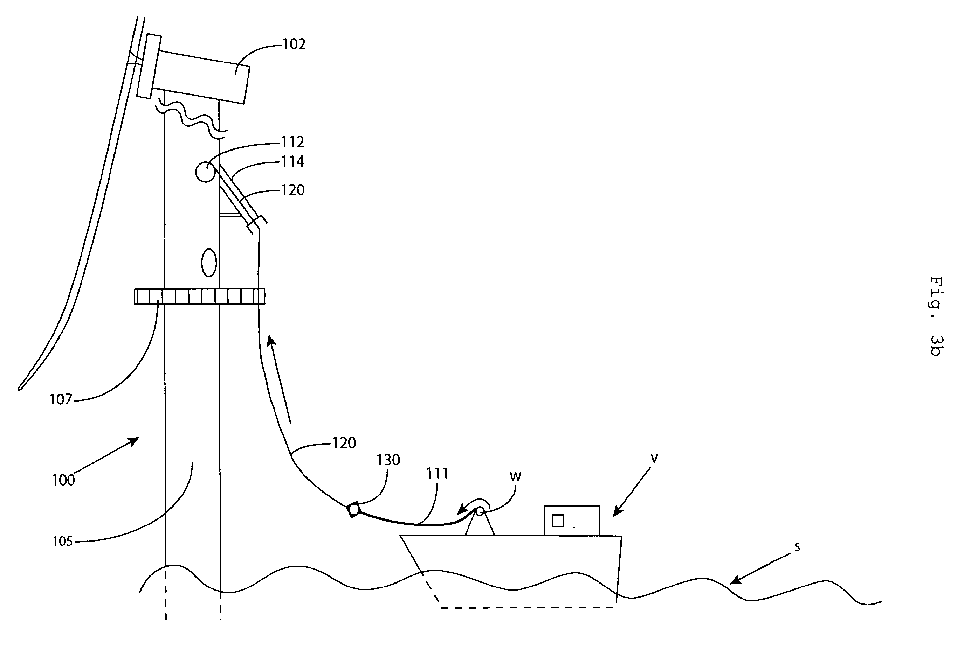

The end 113 of the accessory line 120 is connected to the main line 111. Now, the winch 112 will hoist the main line 111 to distal end of the boom 114 (Fig. 3b). At the end of the main line 111, there is an active section 131 of a connector 130. It is designed to grab the distal end of the boom 114, which is provided with a passive section 132 of the connector 130 comprising a collar 137 to ensure proper grip by claws 138 of the active section 131 to the boom 114 and hence to the wind turbine 100. The active section 131 of the connector 130 may be provided with pre-tensioned springs acting on the claws 138 that are released once the distal end of the boom 114 has contacted or entered the active section 131 of the connector 130. This, however, is merely one of a myriad of options, as will be clear to the ordinary person skilled in the art, and the present invention is not restricted to this particular type of connector 130. To facilitate the easy mating of the passive and active sections 132, 131 of the connector 130, a centering organ 133 may be present. It may also serve to prevent the end 113 of the accessory line 120 from entering the boom 114 too far, e.g. because a knot is present. Because the forces exerted on the boom 114 can be substantial, it is desirable to provide a support beam 118. In fig. 1 and 2 it can clearly be seen that the boom 114 is at an angle to the vertical and pointing downwards (angle β is 30°), which facilitates the lowering of the end 113 of the accessory line 120. The distal end of the boom 114 is preferably 1-3 m away from the tower body 105, thus providing ample clearance from the wall of the tower body 105. Very large distances are generally not desirable, both for reasons of strength and because the boom might get hit by a turbine blade 103.

The main line 111 is connected to the vessel at a distance from the active section 131 of the connector 130. The vessel V will put the main line 111 taut, by using the winch W and/or by moving the vessel V (here backwards). Thus, a strong and reliable connection between the vessel V and the wind turbine 100 has been established. The main line 111 is at an angle α of about 30°.

The main line 111 can be made of any suitable material, e.g. of shock absorbing materials. Suitable materials are, for example, plastic fiber-based materials, but at present steel is preferred in view of the low friction they provide when transporting the load.

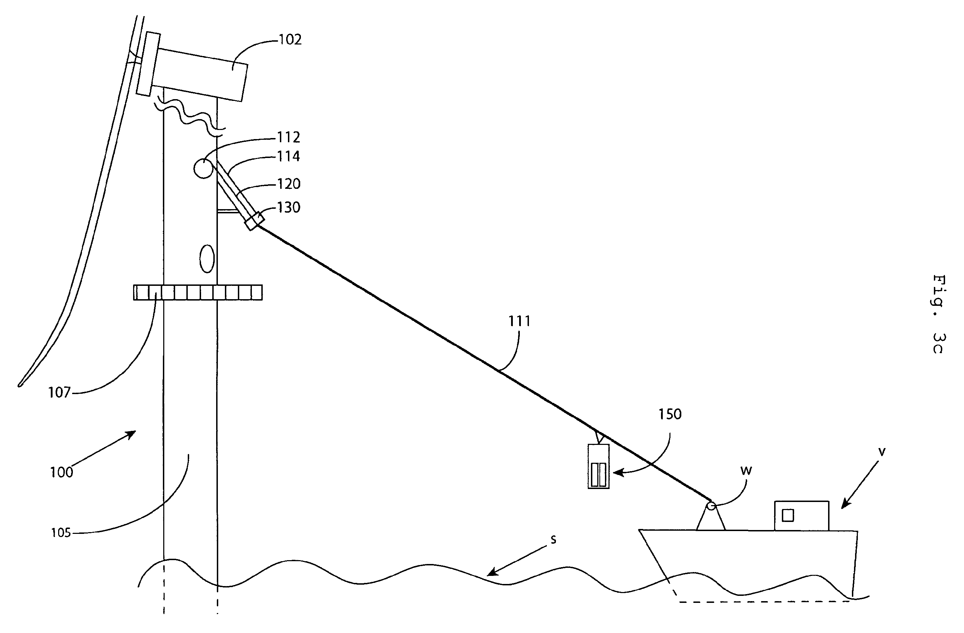

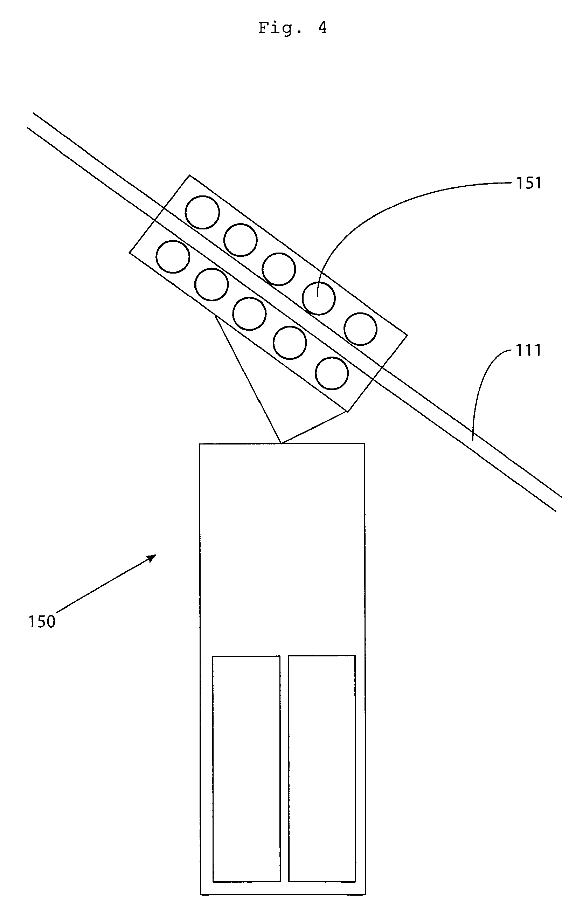

To transport the load, a transport member 150 (shown at three locations a, b and c in fig. 1; and in fig. 3c) can for example be a gangway, a lift cage or cabin or conveyor cage or the like, and in the present case a cabin 150. Here the cabin 150 is provided with a set of rollers 151 (fig. 4) frictionally engaging the stretched main line 111 and provided with a motor (not shown) for driving the set of rollers 151. This in itself is technology well known in the art, not warranting a further elucidation. The motor can for instance be an electrical motor, which can be powered by a battery in the cabin or by a battery on the vessel using a power cable.

After the cabin 150 has been brought back to the vessel V, the active section 131 of the connector 130 will be activated to release the passive section 132 and the winch 112 will lower the end 113 of the accessory line 120. To this end, the active section 131 of the connector 130 may have a motor 139.

To avoid that the main line 111 will end up in the sea S, a winch W on board of the vessel V may simultaneously reel in the main line 111. On board, the end 113 of the accessory line 120 will be disconnected from the main line 111 and hoisted up again by the winch 112. The end 113 of the accessory line 120 may have been connected to the main line 111 (including to active section 131 of the connector 130) in any way, e.g. using a knot or using a small connector such as a carabine hook. Because the only weight that has to be lifted is the weight of the main line 111, this isn't very critical.

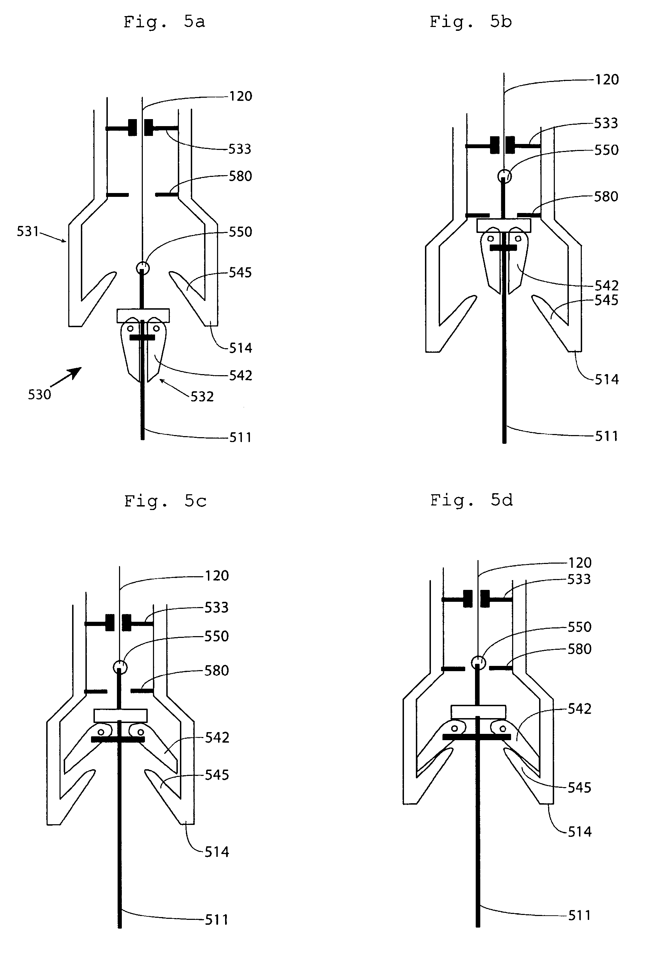

Fig. 5a-d illustrate a connector 530 that is preferred for reasons of safety. The connector 530 comprises an active section 531 and a passive section 532. The passive section 532 is the distal end of the boom 514, and comprises a centering organ 533 for guiding accessory line 120 so as to allow the active section 531 to be inserted into the passive section 532. The active section 532 is provided with an eye 550 for attaching the accessory line on board of the vessel V. Flange 580 prevents the active section 531 from entering the boom 514 to an undesired extent.

The active section comprises a sturdy frame 541 provided with arms 542 which can be in a first, collapsed position (Fig. 5a) suitable for insertion into the passive section 532. After insertion into the passive section 532 (Fig. 5b), the arms 542 are spread to a second position (Fig. 5c) using an actuator 544 such as a radiographically controlled motor. Instead of a radiographically controlled motor, the motor may be operated using a switch on the active section that is activated by contact with the flange 580. Subsequently the main line 111 is pulled taut, resulting in a secure connection, with the arms 542 being (passively) held by a stop 545 in the form of an inward pointing, tapered flange. This design has a great passive safety, wherein the arms 542 are kept spread out (in the second position) by the weight of the active section 531 of the connector 530. To release the active section 531, the active section 531 will be hoisted up a bit, the actuator 544 will be activated (e.g. by contact with the flange 580) to reduce the spread of the arms 542, and the active section 531 will be lowered, brought closer to the vessel V using winch W, and detached from the accessory line 520.

## Claims

1. A method of transferring a load between a vessel (V) and a wind turbine (100), wherein
- the wind turbine (100) comprises a tower (101) with an entrance (106) above sea level;
- the tower (101) comprises an accessory line (120), a tower body (105) and a hollow boom (114) at the outside of the tower body (105), said hollow boom (114) being capable of serving as a guide for the accessory line (120), the hollow boom (114) extending from the tower body (105) at an angle β to the vertical pointing downwards and
- the vessel (V) carries a main line (111) having a distal end for connection to the tower (101);
the method comprising the steps of
- lowering the accessory line (120) through the hollow boom (114) at a horizontal distance of at least 1 m from the tower body (105);
- connecting the main line (111) at its distal end to the accessory line (120);
- hoisting the distal end of the main line (111) using the accessory line (120);
- releasably connecting the distal end of the main line (111) to the hollow boom (114) of the tower (101) using a connector (130), the connection being releasable by remote control;
- using the vessel (V) to ensure that the main line (111) is taut at an angle α of less than 45° with the horizontal; and
- guiding a transport member (150) along the taut main line (111) to move the load between the vessel (V) and the wind turbine (100).

2. The method according to claim 1, **characterized in that** the accessory line (120) is lowered using a winch (112) that is remotely controllable.

3. The method according to claim 1 or 2, **characterized in that** the connector (130) comprises a passive section (132) and an active section (131) for releasably connecting to the passive section (132), the distal end of the main line (111) being provided with the active section (131), and the active section (131) of the connector (130) is connected to the passive section (132) after hoisting the distal end.

4. The method according to claim 3, wherein the active section (532) of the connector is inserted into the passive section (531) having a stop (545), and the active section (532) comprises at least one moveable arms (542) and an actuator (544) for controlling the spread of said at least one arm (542), the stop (545) preventing the active section (532) from leaving the passive section (531) if said at least arm (542) is spread.

5. The method according to claim 3 or 4, wherein the active section (530) is designed such that the stop (545) helps to keep the arms (542) spread out and hence the active section (531) blocked from leaving the passive section (532).

6. A wind turbine (100) comprising a tower (101) provided with an accessory line (120) for hoisting a main line (111) for transferring a load between a vessel (V) and the wind turbine (100) using a transport member (150), wherein the tower (101) comprises
- a tower body (105); and
- a hollow boom (114) capable of serving as a guide for the accessory line (120) therethrough, the hollow boom (114) extending from the tower body (105) at an angle β to the vertical pointing downwards for lowering the accessory line (120) at a horizontal distance from the outer wall of the tower body (105) of at least 1 m,
**characterized in that** the hollow boom (114) is provided at its inner wall with a stop (545) and the stop (545) comprises a tapered flange, tapering towards the center line of the hollow boom (114) and towards the proximal end of the hollow boom (114).

7. The wind turbine (100) according to claim 6, wherein the wind turbine (100) comprises a remotely controllable winch (112) for lowering the accessory line (120) and raising the main line (111).

## Patentansprüche

1. Verfahren zur Übertragung eine Last zwischen einem Schiff (V) und einer Windturbine (100), wobei
- die Windturbine (100) einen Mast (101) mit einem Eingang (106) über dem Meeresspiegel umfasst;
- der Mast (101) eine Hilfsleine (120), einen Mastkörper (105) und einen hohlen Ausleger (114) an der Außenseite des Mastkörpers (105) umfasst, wobei der besagte hohle Ausleger (114) dazu geeignet ist als Führung für die Hilfsleine (120) zu dienen, wobei der hohle Ausleger (114) von dem Mastkörper (105) in einem Winkel β zur Vertikalen nach unten zeigend absteht und
- das Schiff (V) eine Hauptleine (111) aufweist, die ein fernes Ende besitzt um mit dem Mast (101) verbunden zu werden;
wobei das Verfahren folgende Schritte umfasst
- die Hilfsleine (120) durch den hohlen Ausleger (114) in einem horizontalen Abstand von wenigstens 1m vom Mastkörper (105) herunterlassen;
- die Hauptleine (111) mit ihrem fernen Ende mit der Hilfsleine (120) verbinden;
- das ferne Ende der Hauptleine (111) hochziehen unter Verwendung der Hilfsleine (120);
- das ferne Ende der Hauptleine (111) an dem hohlen Ausleger (114) des Masts (101) unter Verwendung eines Verbinders (130) lösbar verbinden, wobei der Verbindung durch eine Fernbedienung lösbar ist;
- das Schiff (V) verwenden um sicherzustellen, dass die Hauptleine (111) in einem Winkel α von weniger als 45° zur Horizontalen gespannt ist; und
- ein Transportglied (150) entlang der gespannten Hauptleine führen, um die Last zwischen dem Schiff (V) und der Windturbine (100) zu bewegen.

2. Verfahren nach Anspruch 1, **dadurch gekennzeichnet, dass** die Hilfsleine (120) unter Verwendung eine Winde (112), die fernbedienbar ist, herabgesenkt wird.

3. Verfahren nach einem der Ansprüche 1 oder 2, **dadurch gekennzeichnet, dass** der Verbinder (130) einen passiven Bereich (132) und einen aktiven Bereich (131) zur lösbaren Verbindung mit dem passiven Bereich (132) umfasst, wobei das ferne Ende der Hauptleine (111) mit dem aktiven Bereich (131) ausgestattet wird und der aktive Bereich (131) des Verbinders (130) mit dem passiven Bereich (132) verbunden wird, nachdem das ferne Ende hochgezogen ist.

4. Verfahren nach Anspruch 3, wobei der aktive Bereich (532) des Verbinders in den passiven Bereich (531) eingeführt wird, der einen Halt (545) aufweist, wobei der aktive Bereich (531) wenigstens einen bewegbaren Arm (542) umfasst und einen Auslöser (544) um die Ausbreitung des besagten wenigstens einen Armes (541) zu steuern, wobei der Halt (545) den aktiven Bereich (532) daran hindert den passiven Bereich (531) zu verlassen, wenn der besagte wenigstens eine Arm (542) ausgebreitet ist.

5. Verfahren nach Anspruch 3 oder 4, wobei der aktive Bereich (530) so ausgebildet ist, dass der Halt (545) hilft die Arme (542) ausgebreitet zu lassen und somit der aktive Bereich (531) blockiert wird den passiven Bereich (532) zu verlassen.

6. Eine Windturbine (100), umfassen einen Mast (101), welcher mit eine Hilfsleine (120) ausgestattet ist, um die Hauptleine (111) hochzuziehen um eine Last zwischen einem Schiff (V) und der Windturbine (100) mittels eines Transportglieds (150) zu übertragen, wobei der Mast (101) umfasst
- einen Mastkörper (105); und
- einen hohlen Ausleger (114), der dazu geeignet ist als Führung für die Hilfsleine (120) durch diesen hindurch zu dienen, wobei der hohle Ausleger (114) von dem Mastkörper (105) in einem Winkel β zur Vertikalen nach unten zeigend absteht, um die Hilfsleine (120) in einem horizontalen Abstand von der äußeren Wand des Mastkörpers von wenigstens 1m herunterzulassen,
**dadurch gekennzeichnet, dass** der hohle Ausleger (114) an seiner inneren Wand mit einem Halt (545) ausgestattet ist und der Halt (545) einen konisch zulaufenden Flansch umfasst, der in Richtung der Mittellinie des hohlen Auslegers (114) und in Richtung des nahen Endes des hohlen Auslegers (114) konisch zuläuft.

7. Die Windturbine (100) nach Anspruch 6, wobei die Windturbine (100) eine fernsteuerbare Winde (112) umfasst, um die Hilfsleine (120) herunterzulassen und die Hauptleine (111) hochzuziehen.

## Revendications

1. Procédé pour transférer une charge entre un navire (V) et une éolienne (100), dans lequel:
l'éolienne (100) comprend une tour (101) avec une entrée (106) au-dessus du niveau de la mer;
la tour (101) comprend une ligne auxiliaire (120), un corps de tour (105) et une flèche creuse (114) à l'extérieur du corps de tour (105), ladite flèche creuse (114) pouvant servir de guide pour la ligne auxiliaire (120), la flèche creuse (114) s'étendant à partir du corps de tour (105) à un angle β par rapport à la verticale, orientée vers le bas, et
le navire (V) porte une ligne principale (111) ayant une extrémité distale pour le raccordement à la tour (101);
le procédé comprenant les étapes consistant à:
abaisser la ligne auxiliaire (120) à travers la flèche creuse (114) à une distance horizontale d'au moins 1 m du corps de tour (105);
raccorder la ligne principale (111) au niveau de son extrémité distale à la ligne auxiliaire (120);
lever l'extrémité distale de la ligne principale (111) à l'aide de la ligne auxiliaire (120);
raccorder de manière amovible l'extrémité distale de la ligne principale (111) à la flèche creuse (114) de la tour (101) à l'aide d'un connecteur (130), le raccordement étant amovible par télécommande;
utiliser le navire (V) pour garantir que la ligne principale (111) est tendue à un angle α inférieur à 45° par rapport à l'horizontale; et
guider un élément de transport (150) le long de la ligne principale (111) tendue afin de déplacer la charge entre le navire (V) et l'éolienne (100).

2. Procédé selon la revendication 1, **caractérisé en ce que** la ligne auxiliaire (120) est abaissée à l'aide d'un treuil (112) qui peut être commandé à distance.

3. Procédé selon la revendication 1 ou 2, **caractérisé en ce que** le connecteur (130) comprend une section passive (132) et une section active (131) pour se raccorder de manière amovible la section passive (132), l'extrémité distale de la ligne principale (111) étant prévue avec la section active (131), et la section active (131) du connecteur (130) est raccordée à la section passive (132) après le levage de l'extrémité distale.

4. Procédé selon la revendication 3, dans lequel la section active (532) du connecteur est insérée dans la section passive (531) ayant une butée (545), et la section active (532) comprend au moins un bras mobile (542) et un actionneur (544) pour commander le déploiement dudit au moins un bras (542), la butée (545) empêchant la section active (532) de sortir de la section passive (531) si ledit au moins un bras (542) est déployé.

5. Procédé selon la revendication 3 ou 4, dans lequel la section active (530) est conçue de sorte que la butée (545) aide à maintenir les bras (542) déployés et par conséquent à empêcher que la section active (531) sorte de la section passive (532).

6. Eolienne (100) comprenant une tour (101) prévue avec une ligne auxiliaire (120) pour lever une ligne principale (111) afin de transférer une charge entre un navire (V) et l'éolienne (100) à l'aide d'un élément de transport (150), dans laquelle la tour (101) comprend:
un corps de tour (105); et
une flèche creuse (114) pouvant servir de guide pour la ligne auxiliaire (120) à travers cette dernière, la flèche creuse (114) s'étendant à partir du corps de tour (105) à un angle β par rapport à la verticale orientée vers le bas pour abaisser la ligne auxiliaire (120) à une distance horizontale de la paroi externe du corps de tour (105) d'au moins 1 m,
**caractérisée en ce que** la flèche creuse (114) est prévue au niveau de sa paroi interne avec une butée (545) et la butée (545) comprend une bride progressivement rétrécie, se rétrécissant progressivement vers la ligne centrale de la flèche creuse (114) et vers l'extrémité proximale de la flèche creuse (114).

7. Eolienne (100) selon la revendication 6, dans laquelle l'éolienne (100) comprend un treuil (112) pouvant être commandé à distance pour abaisser la ligne auxiliaire (120) et lever la ligne principale (111).
